# EUROPEAN PATENT APPLICATION

(11) **EP 1 852 988 A1**
(43) Date of publication of application: **07.11.2007**
(21) Application number: 06711588.1
(22) Date of filing: 12.01.2006
(51) Int. Cl.: H04H 5/00

(54) **SUBCARRIER SIGNAL GENERATOR AND MULTIPLEXED SIGNAL DEMODULATOR**

(30) Priority: 24.01.2005 JP 2005015802
(71) Applicant: Pioneer Corporation, Tokyo 153-8654 (JP)
(72) Inventor: KUBUKI, Toshiaki, Nishimachi, Yamada, Kawagoe-shi, Saitama (JP); YAMAMOTO, Yuji, Nishimachi, Yamada, Kawagoe-shi, Saitama (JP)
(74) Representative: HOFFMANN EITLE
(86) International application number: PCT/JP2006/300265
(87) International publication number: WO 2006/077761

(57) **Abstract**

A subcarrier signal generator according to the present invention includes a BPF that extracts a pilot signal from an FM detection signal, a π/2 phase shifter that generates a pilot shift signal, in which a phase of the pilot signal is shifted by π/2, a first multiplier that multiplies the pilot signal with the pilot shift signal to generate a first resultant signal, a second multiplier that squares the pilot signal, a third multiplier that squares the pilot shift signal, an adder that adds the squared pilot signal and the squared pilot shift signal to generate a second resultant signal, and a divider that divides the first resultant signal with the second resultant signal to generate a subcarrier signal. When a subcarrier signal is generated from a multiplexed pilot signal in this manner, an amplitude level of the subcarrier signal can be made constant all the time.

## Description

### TECHNICAL FIELD

The present invention generally relates to a subcarrier signal generator and a multiplexed signal demodulator. The present invention more specifically relates to a subcarrier signal generator that extracts a pilot signal from a multiplexed detection signal to generate a subcarrier signal, and a multiplexed signal demodulator.

### BACKGROUND ART

A typical FM stereophonic broadcast receiver includes a built-in FM detector and a built-in FM stereo demodulator. The FM detector receives an FM stereo signal and FM-detects the received FM stereo signal to generate an FM detection signal. The FM stereo demodulator separates a main signal component (L+R) and a sub signal component (L-R) from the FM detection signal. Moreover, the FM stereo demodulator synthesizes the separated main signal component and sub signal component in a matrix circuit to reproduce and output an L signal and an R signal, which are demodulation signals.

The FM stereo demodulator has a function of separating the main signal component (L+R) and the sub signal component (L-R) from the FM detection signal and includes a built-in sub signal extractor that extracts only the sub signal component (L-R) from the FM detection signal. Such a sub signal extractor extracts a pilot signal (19 kHz) from the FM detection signal, generates a subcarrier signal (38 kHz) having a frequency twice as high as that of the pilot signal (SUB carrier) and a constant amplitude level based on the pilot signal, and multiplies the FM detection signal with the subcarrier signal. The resultant signal is then passed through an LPF to extract the sub signal component from the resultant signal. It is known to use an AGC circuit to make the amplitude level of the subcarrier signal constant (for example, see Patent Document 1).

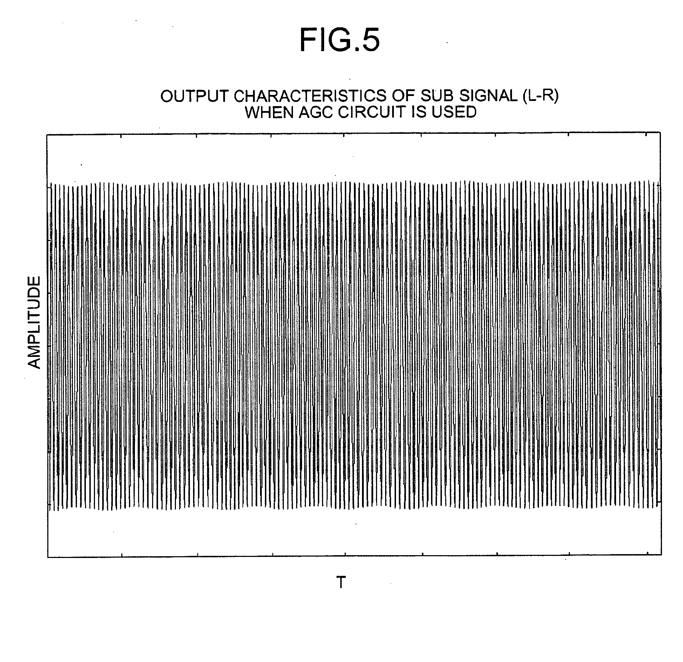

Fig. 5 is a graph for explaining the characteristics of the subcarrier signal when an AGC circuit is used. Fig. 5 depicts output characteristics of the sub signal output from the sub signal extractor. The time is plotted on the horizontal axis and the amplitude is plotted on the vertical axis. It is assumed that the frequency and the amplitude of the sub signal component in the FM detection signal are constant. When the amplitude level of the pilot signal fluctuates, the AGC circuit cannot follow the fluctuation. Therefore, the amplitude level of the subcarrier signal fluctuates and the amplitude level of the sub signal output from the sub signal extractor does not become constant as shown in Fig. 5. Accordingly, there is a problem in that separation of the R signal and the L signal output from the stereo demodulator circuit fluctuates (deteriorates), and both L components and R components remain in both the R signal and the L signal, thereby deteriorating the stereo feeling.
Patent Document 1: International Publication No. WO94/014246 pamphlet

### DISCLOSURE OF INVENTION

### PROBLEM TO BE SOLVED BY THE INVENTION

The present invention has been achieved in view of the foregoing, and it is an obj ect of the present invention to provide a subcarrier signal generator and a multiplexed signal demodulator capable of always making the amplitude level of the subcarrier signal constant when the subcarrier signal is generated from the pilot signal of the multiplexed signal.

### MEANS FOR SOLVING PROBLEM

To solve the above problems and to achieve the objects, according to an aspect of the present invention, a subcarrier signal generator includes a pilot signal extractor that extracts a pilot signal from a multiplexed detection signal including a main signal, a sub signal, and the pilot signal; a phase shifter that generates a pilot shift signal, in which a phase of extracted pilot signal is shifted by π/2; a first multiplier that multiplies the extracted pilot signal with the pilot shift signal to generate a first resultant signal; a secondmultiplier that squares the extracted pilot signal; a third multiplier that squares the pilot shift signal; an adder that adds squared pilot signal and squared pilot shift signal to generate a second resultant signal; and a divider that divides the first resultant signal by the second resultant signal to generate a subcarrier signal.

Moreover, according to another aspect of the present invention, a multiplexed signal demodulator includes a main signal extractor that extracts a main signal from a multiplexed detection signal including the main signal, a sub signal, and a pilot signal; a sub signal extractor that extracts the sub signal from the multiplexed detection signal; and a synthesizing unit that generates a demodulation signal based on extracted main signal and extracted sub signal. The sub signal extractor includes a pilot signal extractor that extracts the pilot signal from the multiplexed detection signal; a phase shifter that generates a pilot shift signal, in which a phase of extracted pilot signal is shifted by π/2; a first multiplier that multiplies the extracted pilot signal with the pilot shift signal to generate a first resultant signal; a second multiplier that squares the extracted pilot signal; a third multiplier that squares the pilot shift signal; an adder that adds squared pilot signal and squared pilot shift signal to generate a second resultant signal; a divider that divides the first resultant signal by the second resultant signal to generate a subcarrier signal; a fourth multiplier that multiplies the multiplexed detection signal with the subcarrier signal and outputs a third resultant signal; and a filter unit that extracts the sub signal from the third resultant signal output from the fourth multiplier.

### BRIEF DESCRIPTION OF DRAWINGS

[Fig. 1] Fig. 1 is a configuration example of a multiplexed signal receiver according to an embodiment of the present invention.
[Fig. 2] Fig. 2 is a configuration example of a stereo demodulator circuit shown in Fig. 1.
[Fig. 3] Fig. 3 is a configuration example of a subcarrier-signal generation circuit shown in Fig. 2.
[Fig. 4] Fig. 4 is a graph for explaining the characteristics of a subcarrier signal generated by the subcarrier-signal generation circuit shown in Fig. 2.
[Fig. 5] Fig. 5 is a graph for explaining the characteristics of a subcarrier signal when an AGC circuit is used.

### EXPLANATIONS OF LETTERS OR NUMERALS

- 1: Multiplexed signal receiver
- 10: Antenna
- 20: RF amplifier
- 30: Tuner circuit
- 40: FM detection circuit
- 50: Stereo demodulator circuit
- 51: Main-signal extraction circuit
- 52: Sub-signal extraction circuit
- 53: Matrix circuit
- 60: LPF
- 101: BPF (19-KHz bandpass filter)
- 102: π/2 phase shifter
- 103: Subcarrier-signal generation circuit
- 104: Mixer
- 105: LPF
- 201: First multiplier
- 202: Second multiplier
- 203: Third multiplier
- 204: Adder
- 205: Divider

### BEST MODE(S) FOR CARRYING OUT THE INVENTION

Exemplary embodiments of a subcarrier signal generator and a multiplexed signal receiver that employs a multiplexed signal demodulator according to the present invention will be explained below in detail with reference to the accompanying drawings. Note that the present invention is not limited to the following embodiments. Moreover, it is not mandatory that all the combinations of characteristics explained in the embodiments are necessary as for means for solving problems. In addition, constituent elements in the embodiments include elements that readily occur to persons skilled in the art or substantially equivalent elements.

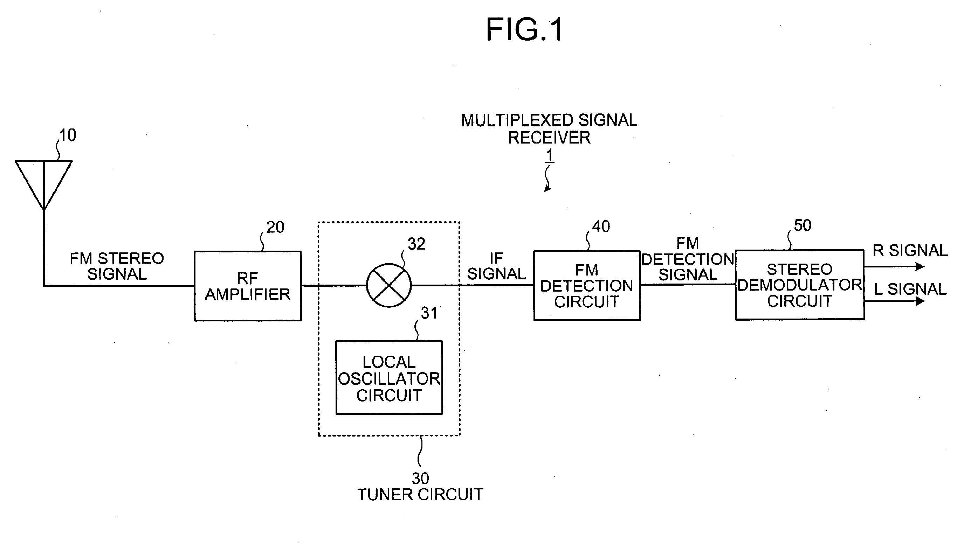

Fig. 1 is a configuration example of a multiplexed signal receiver 1 according to an embodiment of the present invention. The multiplexed signal receiver 1 shown in Fig. 1 specifically represents an FM stereo signal receiver that receives an FM stereo signal.

As shown in Fig. 1, the multiplexed signal receiver 1 includes an antenna 10, an RF amplifier 20, a tuner circuit 30, an FM detection circuit 40, and a stereo demodulator circuit 50.

An FM stereo signal including a main signal (L+R), a sub signal (L-R), and a pilot signal is received through the antenna 10. The RF amplifier 20 amplifies the FM stereo signal input via the antenna 10 and outputs the amplified FM stereo signal. The tuner circuit 30 includes a local oscillator 31 and a mixer 32. The local oscillator 31 outputs a local oscillation signal to the mixer 32. The mixer 32 mixes the amplified FM stereo signal input from the RF amplifier 20 with the local oscillation signal input from the local oscillator 31 to generate an IF signal (intermediate frequency signal).

The FM detection circuit 40 performs FM detection on the IF signal input from the mixer 32 to generate an FM detection signal and outputs the FM detection signal to the stereo demodulator circuit 50. The stereo demodulator circuit 50 extracts a main signal (L+R) and a sub signal (L-R) from the FM detection signal input from the FM detection circuit 40, and synthesizes the extracted main signal (L+R) and sub signal (L-R) to reproduce and output an L signal and an R signal, which are the demodulation signals.

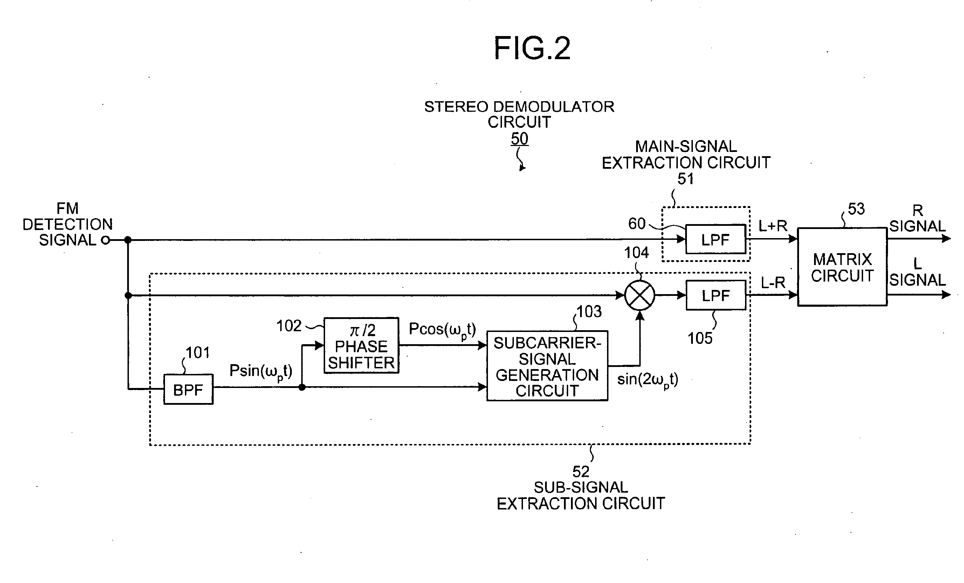

Fig. 2 is a configuration example of the stereo demodulator circuit 50 shown in Fig. 1. As shown in Fig. 2 , the stereo demodulator circuit 50 includes a main-signal extraction circuit 51, a sub-signal extraction circuit 52, and a matrix circuit 53. The main-signal extraction circuit 51 includes an LPF 60. The LPF 60 extracts the main signal (L+R) from the FM detection signal input from the FM detection circuit 40 and outputs the main signal to the matrix circuit 53. The sub-signal extraction circuit 52 extracts the sub signal (L-R) from the FM detection signal input from the FM detection circuit 40 and outputs the sub signal to the matrix circuit 53. The matrix circuit 53 performs arithmetic operation on the main signal (L+R) input from the main-signal extraction circuit 51 and the sub signal (L-R) input from the sub-signal extraction circuit 52 to reproduce and output the L signal and the R signal, which are the demodulation signals.

As shown in Fig. 2, the sub-signal extraction circuit 52 includes a BPF (19-KHz bandpass filter) 101, a π/2 phase shifter 102, a subcarrier-signal generation circuit 103, a mixer 104, and an LPF 105. In Fig. 2, the pilot signal is Psin(ω_{P}t), where ω_{P} stands for an angular frequency of the pilot signal, and P stands for amplitude of the pilot signal.

The BPF (19-KHz bandpass filter) 101 receives the FM detection signal from the FM detection circuit 40, and extracts the 19-KHz pilot signal Psin (ω_{P}t) included in the FM detection signal. The BPF 101 outputs the extracted pilot signal Psin (ω_{P}t) to the π/2 phase shifter 102 and the subcarrier-signal generation circuit 103. The π/2 phase shifter 102 generates a pilot shift signal Pcos (ω_{P}t), in which a phase of the pilot signal Psin(ω_{P}t) input from the BPF 101 is shifted by π/2, and outputs the pilot shift signal Pcos(ω_{P}t) to the subcarrier-signal generation circuit 103.

The subcarrier-signal generation circuit 103 generates a 38-KHz subcarrier signal sin (ω_{P}t) synchronized with the pilot signal Psin (ω_{P}t), based on the pilot signal Psin (ω_{P}t) input from the BPF 101 and the pilot shift signal Pcos (ω_{P}t) input from the π/2 phase shifter 102, and outputs the subcarrier signal sin(2ω_{P}t) to the mixer 104 . The mixer 104 multiplies the FM detection signal input from the FM detection circuit 40 with the subcarrier signal sin(2ω_{P}t), converts sub signal (38 kHz ± 15 kHz) in the FM detection signal to a low-pass signal, and outputs the low-pass signal to the LPF 105. The LPF 105 allows the sub signal (L-R), which is a low frequency-band component in the signal input from the mixer 104, to pass through.

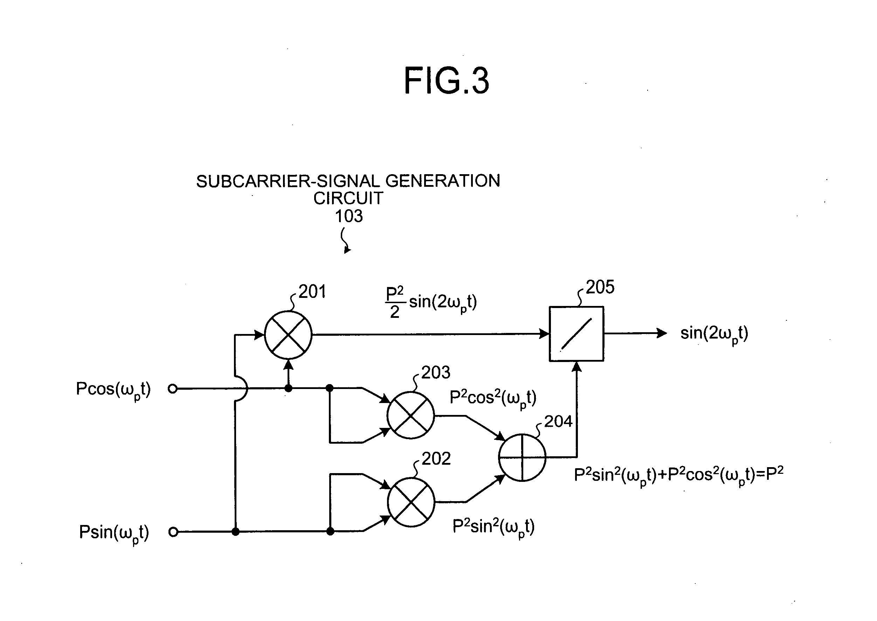

Fig. 3 is a configuration example of the subcarrier-signal generation circuit 103 shown in Fig. 2. The subcarrier-signal generation circuit 103 includes, as shown in Fig. 3, a first multiplier 201, a second multiplier 202, a third multiplier 203, an adder 204, and a divider 205.

The first multiplier 201 multiplies the pilot signal Psin (ω_{P}t) input from the BPF 101 with the pilot shift signal Pcos(ω_{P}t) input from the π/2 phase shifter 102 and outputs a first resultant signal (P²/2)·sin(2ω_{P}t) to the divider 205. The second multiplier 202 squares the pilot signal Psin (ω_{P}t) input from the BPF 101 and outputs a squared pilot signal P²sin²(ω_{P}t) to the adder 204. The third multiplier 203 squares the pilot shift signal Pcos(ω_{P}t) input from the π/2 phase shifter 102 and outputs a squared pilot-shift signal P²cos²(ω_{P}t) to the adder 204.

The adder 204 adds the squared pilot signal P²sin² (ω_{P}t) input from the second multiplier 203 and the squared pilot-shift signal P²cos² (ω_{P}t) input from the third multiplier 203 and outputs a second resultant signal {P² · sin² (ω_{P}t)+P² · cos² (w_{P}t)}=P² to the divider 205. The divider 205 divides the first resultant signal (P²/2) · sin² (ω_{P}t) input from the first multiplier 201 with the second resultant signal {P²· sin² (ω_{P}t) +P² · cos² (ω_{P}t) }=P² input from the adder 204 to generate a subcarrier signal sin (2ω_{P}t) and outputs the subcarrier signal to the mixer 104.

Thus, in the subcarrier-signal generation circuit 103, a product (P²/2) · sin (2ω_{P}t) of the pilot signal Psin (ω_{P}t) and the pilot shift signal Pcos(ω_{P}t), in which the phase of the pilot signal Psin (ω_{P}t) is shifted by π/2, is divided by the sum of respective squares {P²·sin²(ω_{P}t)+P²·cos²(ω_{P}t)}=P² of the pilot signal Psin(ω_{P}t) and the pilot shift signal Pcos(ω_{P}t), in which the phase of the pilot signal Psin (ω_{P}t) is shifted by π/2, thereby generating the subcarrier signal sin(2ω_{P}t). Accordingly, even when the amplitude level of the pilot signal fluctuates, the amplitude level of the subcarrier signal sin(2ω_{P}t) can be kept constant all the time.

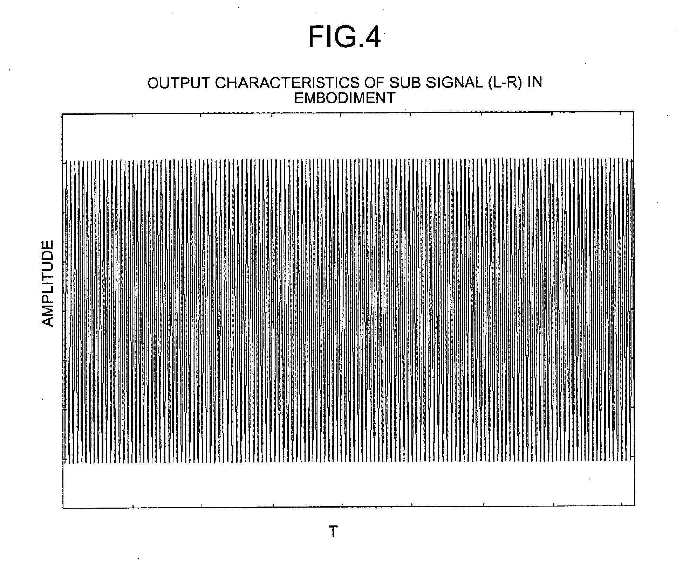

Fig. 4 is a graph for explaining the characteristics of the subcarrier signal generated by the subcarrier-signal generation circuit 103. Fig. 4 depicts an output characteristic of the sub signal (L-R) output from the sub-signal extraction circuit 52, when it is assumed that the frequency and the amplitude of the sub signal (L-R) included in the FM detection signal are constant. The time is plotted on the horizontal axis and the amplitude is plotted on the vertical axis. In the present embodiment, because the level (amplitude) of the subcarrier signal can be kept constant all the time, when the frequency and the amplitude of the sub signal (L-R) included in the FM detection signal are constant, as shown in Fig. 4, the amplitude of the sub signal (L-R) output from the sub-signal extraction circuit 52 becomes constant.

In the sub-signal extraction circuit 52 of the present embodiment, the BPF 101 extracts the pilot signal from the FM detection signal, the π/2 phase shifter 102 generates the pilot shift signal, in which the phase of the pilot signal is shifted by π/2, the first multiplier 201 multiplies the pilot signal with the pilot shift signal to generate the first resultant signal, the second multiplier 202 squares the pilot signal, the third multiplier 203 squares the pilot shift signal, the third multiplier 204 adds the squared pilot signal and the squared pilot shift signal to generate the second resultant signal, and the divider 205 divides the first resultant signal by the second resultant signal to generate the subcarrier signal. Accordingly, even when the amplitude level of the pilot signal fluctuates, the amplitude level of the subcarrier signal can be kept constant all the time, and fluctuation (deterioration) of separation of the R signal and the L signal output from the stereo demodulator circuit 50 can be prevented, thereby enabling stable stereo demodulation.

While an FM stereo signal is taken as an example of a multiplexed signal in the embodiment, the present invention is not limited thereto. In other words, the invention is applicable to a television signal or other multiplexed signals.

### INDUSTRIAL APPLICABILITY

As described above, the subcarrier signal generator and the multiplexed signal demodulator according to the present invention are useful for an apparatus that extracts a pilot signal from a multiplexed signal to generate a subcarrier signal, and widely applicable to a radio receiver such as an FM radio and a television tuner.

## Claims

1. A subcarrier signal generator comprising:
a pilot signal extractor that extracts a pilot signal from a multiplexed detection signal including a main signal, a sub signal, and the pilot signal;
a phase shifter that generates a pilot shift signal, in which a phase of extracted pilot signal is shifted by π/2;
a first multiplier that multiplies the extracted pilot signal with the pilot shift signal to generate a first resultant signal;
a second multiplier that squares the extracted pilot signal;
a third multiplier that squares the pilot shift signal;
an adder that adds squared pilot signal and squared pilot shift signal to generate a second resultant signal; and
a divider that divides the first resultant signal by the second resultant signal to generate a subcarrier signal.

2. The subcarrier signal generator according to claim 1, wherein the multiplexed detection signal is an FM stereo signal.

3. A multiplexed signal demodulator comprising:
a main signal extractor that extracts a main signal from a multiplexed detection signal including the main signal, a sub signal, and a pilot signal;
a sub signal extractor that extracts the sub signal from the multiplexed detection signal; and
a synthesizing unit that generates a demodulation signal based on extracted main signal and extracted sub signal, wherein
the sub signal extractor includes:
a pilot signal extractor that extracts the pilot signal from the multiplexed detection signal;
a phase shifter that generates a pilot shift signal, in which a phase of extracted pilot signal is shifted by π/2 ;
a first multiplier that multiplies the extracted pilot signal with the pilot shift signal to generate a first resultant signal;
a second multiplier that squares the extracted pilot signal;
a third multiplier that squares the pilot shift signal;
an adder that adds squared pilot signal and squared pilot shift signal to generate a second resultant signal;
a divider that divides the first resultant signal by the second resultant signal to generate a subcarrier signal;
a fourth multiplier that multiplies the multiplexed detection signal with the subcarrier signal and outputs a third resultant signal; and
a filter unit that extracts the sub signal from the third resultant signal output from the fourth multiplier.

4. The multiplexed signal demodulator according to claim 3, wherein the multiplexed detection signal is an FM stereo signal.
